# EUROPEAN PATENT SPECIFICATION

(11) **EP 3 327 344 B1**
(45) Date of publication and mention of the grant of the patent: **18.12.2019**
(21) Application number: 17202600.7
(22) Date of filing: 20.11.2017
(51) Int. Cl.: F21S 8/00, F21V 21/108, F21V 21/116, F21V 21/02, F21V 23/00, F21V 17/16

(54) **WALL-MOUNTED LUMINAIRE**
WANDLEUCHTE
LAMPE MURALE

(30) Priority: 24.11.2016 IT 201600118867
(43) Date of publication of application: 30.05.2018
(73) Proprietor: Sandona', Luca, 35126 Padova (IT)
(72) Inventor: Sandona', Luca, 35126 Padova (IT)
(74) Representative: Modiano, Micaela Nadia

(56) References cited:
- DE-U1- 20 110 836
- JP-A- 2010 262 859
- US-A- 5 258 898
- US-A1- 2005 116 171
- US-A1- 2009 040 774
- Eterna Lighting: "Model: WGLEDBK / WGLEDWH LED Well Glass Fitting With PC Diffuser & Optional Corner Bracket", Issue, 31 December 2015 (2015-12-31), pages 1-2, XP055435915, Eterna Lighting Retrieved from the Internet: URL:http://www.eterna-lighting.co.uk/manua ls/WGLEDBK_WH_IG.pdf [retrieved on 2017-12-18]

## Description

The present invention relates to a wall-mounted luminaire.

Currently, in civil and industrial buildings wall-mounted external lighting is provided by means of lamp holders which are installed so as to be placed against a wall at a certain distance from corner of the building itself.

These lamp holders therefore allow to arrange a lamp so that it lights substantially only the face of the building to which the lamp holder is fixed.

This situation is determined by the fact that the electrical cables required for the power supply of an outdoor wall-mounted lamp exit from said wall at a certain distance from a corner of the building, generally between 20 cm and 50 cm depending on the thickness of the walls.

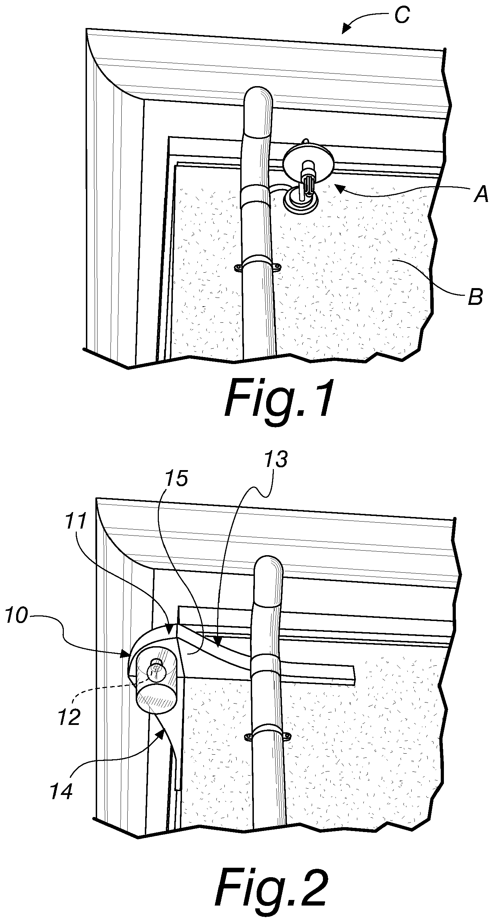

These known lamp holders, despite being widespread and appreciated, an example of which is shown in Figure 1 and designated therein by the letter A, have the important limitation of allowing the lighting only of the face B of the building C to which they are fixed; in order to light two faces of two walls that converge in a same corner of a building it is therefore necessary to install two lamp holders, one for each of the faces to be lit.

Supporting systems for lamps at a corner of a building are currently known which comprise metallic brackets to be applied astride the corner and on which the lamp is applied.

With such a supporting system, the electric power supply cable remains visible between the exit hole from a wall, normally arranged at a distance between 20 cm and 50 cm from the corner of the building, or is protected by means of visible conduits up to the metallic bracket, and then extends exposed up to the lamp and either hangs or is fixed with other known makeshift means such as ties and the like.

Therefore, such a lamp supporting system creates a situation of lack of protection for the electrical cable and at the same time has a low visual impact for the wall of the building, on which the protective conduit remains visible in relief.

A second important limitation of metallic supporting brackets arranged astride a corner of a building is constituted by the fact that the fixing of these brackets to converging walls is generally performed by means of screw anchors; this solution is highly risky for the integrity of the corner of the building, since drilling and placing screw anchors proximate to a corner can cause the forming of cracks on the two converging faces, cracks which render the corner itself fragile with the risk of pieces detaching.

Furthermore, often the application of the angular metallic brackets is not a feasible solution, since generally at a corner of a building there is the vertical drain pipe of the roof gutters, and wall fixing in that region is prevented by the space occupation of the vertical pipe. Model WGLEDBK/WGLEDWH from Eterna lighting is a known wall-mounted luminaire.

The aim of the present invention is to provide a wall-mounted luminaire that is capable of improving the background art in one or more of the aspects indicated above.

Within this aim, an object of the invention is to provide a luminaire that is capable of allowing better and greater lighting at a corner of a building.

Another object of the invention is to provide a luminaire the electric power supply cables of which are better protected with respect to known solutions.

A further object of the invention is to provide a luminaire that can be installed without risks for the integrity of a building corner to which said luminaire is applied.

Another object of the invention is to provide a luminaire that can be installed even in the presence of a vertical gutter pipe.

Another object of the invention is to provide a luminaire that has a better visual impact than supporting systems of the known type.

Another object of the invention is to provide a luminaire that is capable of allowing better and greater lighting at a corner of a building even in the presence of contiguous walls that are not perfectly perpendicular.

Moreover, an object of the present invention is to overcome the drawbacks of the background art in a manner which is alternative with respect to any existing solutions.

This aim, as well as these and other objects which will become better apparent hereinafter, are achieved by a wall-mounted luminaire according to claim 1, optionally provided with one or more of the characteristics of the dependent claims.

Further characteristics and advantages of the invention will become better apparent from the description of two preferred but not exclusive embodiments of the wall-mounted luminaire, illustrated by way of nonlimiting example in the accompanying drawings, wherein:
Figure 1 is a view of a wall-mounted lamp holder of the known type;
Figure 2 is a luminaire according to the invention in a first embodiment thereof;
Figure 3 is a schematic sectional top view of a luminaire according to the invention in the first embodiment of Figure 2;
Figure 4 is a perspective view of a luminaire not according to the invention in a second embodiment;
Figure 5 is another perspective view of a portion of the luminaire of Figure 4;
Figure 6 is a view of a constructive variation of the second embodiment of a luminaire not according to the invention;
Figure 7 is a view of a constructive variation of the first embodiment of a luminaire according to the invention;
Figure 8 is a view of another variation of the first embodiment of a luminaire not according to the invention;
Figure 9 is an exploded perspective view of another variation of the second embodiment;
Figure 10 is an overall plan view of the variation of Figure 9.

With reference to the figures, a wall-mounted luminaire according to the invention is designated generally, in its first embodiment, by the reference numeral 10.

The wall-mounted luminaire 10 comprises
- a supporting part 11 for an electrically powered element, for example a lamp 12,
- two predominantly longitudinally extended parts 13 and 14 for fixing to a wall and for covering the power supply cable, which are adapted to support in a cantilever manner, at a first end 15 and 15a respectively, the supporting part 11.

A predominantly longitudinally extended part, for example a first longitudinally extended part 13, has a passage space 17 for an electric power supply cable 18.

The passage space 17 is extended from the first end 15 to a region proximate to the second opposite end 16 of the predominantly longitudinally extended part 13.

The luminaire 10, in the present first embodiment, has two predominantly longitudinally extended parts 13 and 14 which are arranged so as to be both extended from the supporting part 11, so as to form between them an angle that corresponds to the angle 19 that is defined by the intersection of the planes of arrangement X and Y of two converging walls 20 and 21 to which the luminaire 10 is fixed.

By virtue of this structure, the luminaire 10 supports a lamp 12 in a cantilever fashion in the angular sector formed by the corner 19, so that the lamp 12 can light both converging walls 20 and 21, for an overall lighting angle of approximately 270°, if the converging walls 20 and 21 are at 90° with respect to each other, with respect to an angle of 180° that is typical of known wall-mounted lamp holders.

In the present constructive example, a lamp 12 has been indicated as an electrically powered element, it being understood that the electrically powered element may also be a sign or a video camera or
a sensor in general.

In the position determined by the luminaire 10 according to the invention, the electrically powered element that is supported by the supporting part 11 is placed in the condition to operate on both of the faces of the converging walls 20 and 21.

The supporting part 11 is constituted, for example, by a containment shell for the electrical connections between the electrical cable 18 and the electrically powered element, for example the lamp 12, provided with two lateral openings 22 and 23 preset to face the corresponding predominantly longitudinally extended parts 13 and 14.

The supporting part 11 is fixed to the predominantly longitudinally extended parts 13 and 14 for example by virtue of snap coupling means 24 and 25, which are to be understood as being of a known type.

Each predominantly longitudinally extended part 13 and 14 is fixed to a wall, for example by virtue of snap coupling means, also of a per se known type, comprising two contoured blocks 26 and 27 to be fixed, in a mutually spaced arrangement, to a wall, and corresponding complementarily shaped coupling portions formed inside the predominantly longitudinally extended part 13 and 14.

The contoured blocks 26 and 27 must be appropriately mounted at a safe distance from the corner 28 of the converging walls 20 and 21, so that even if they are fixed by using screw anchors the operations for drilling and inserting the screw anchors do not risk damaging the integrity of the corner 28.

Advantageously, the predominantly longitudinally extended part 13 and 14 has a flat portion 31 and 32 respectively, preset to be arranged at a gutter pipe 33 if present, between the wall 20 and the gutter pipe 33, thus providing the protection and covering of the electrical cable 18 even in a particularly awkward space situation such as the one presented.

These predominantly longitudinally extended parts 13 and 14 are constituted for example by shells made of plastic material which are open on a first side designed to face the wall 20 and 21 and on a second side, perpendicular to the first one, designed to face the supporting part 11 and be coupled to it.

It should be understood that the supporting parts 11 and predominantly longitudinally extended parts 13 and 14 can also be made of other materials, for example metallic material, according to the requirements and needs.

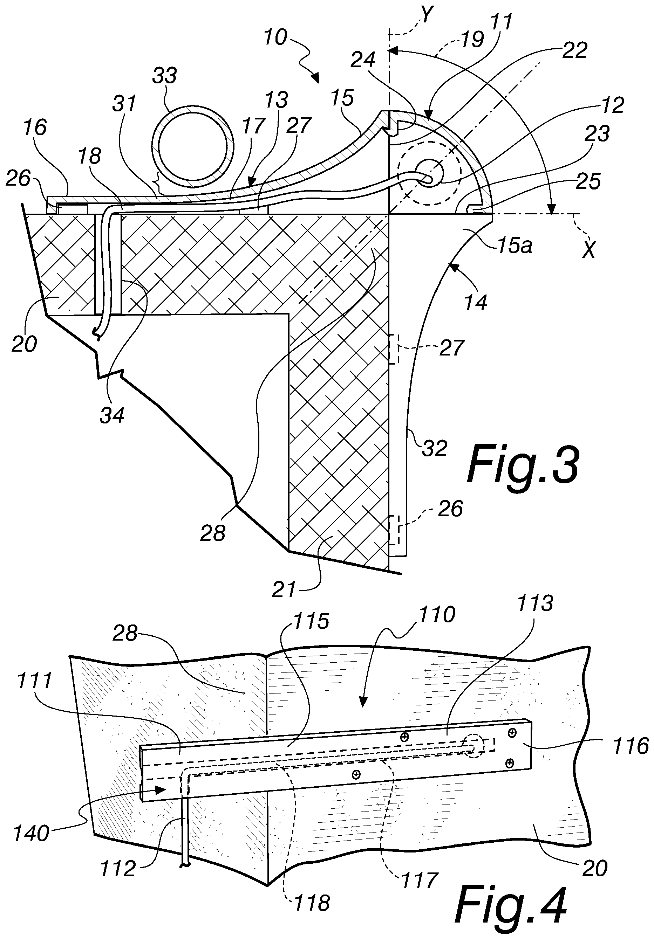

Figure 3, for the sake of completeness, describes a hole 34 in a wall 20, for passage from the inside outward for the electrical cable 18.

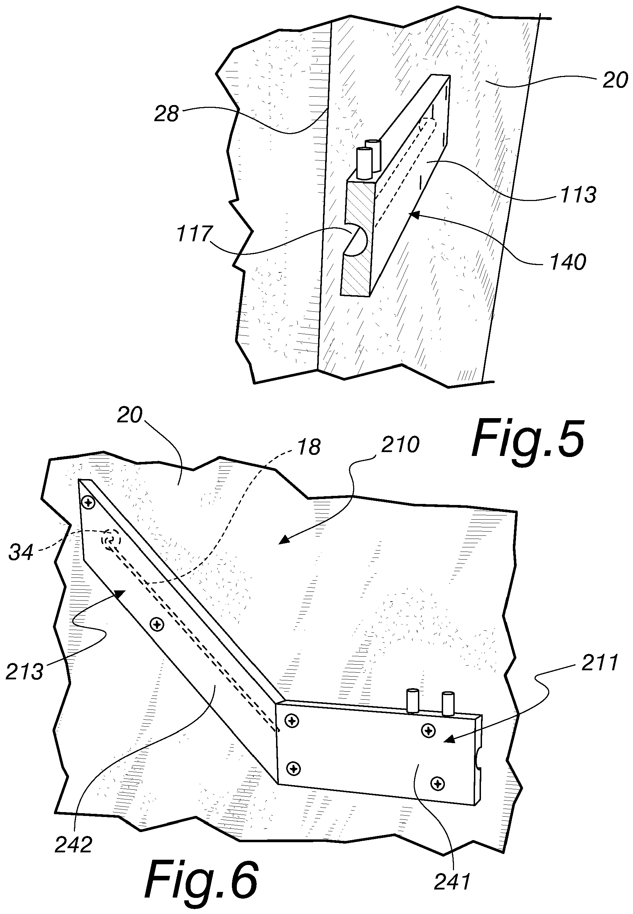

Figures 4 and 5 show a luminaire according to a second embodiment.

In the second embodiment, the wall-mounted luminaire, designated by 110, comprises
- a supporting part 111 for an electrically powered element, for example a lamp 112,
- and a single predominantly longitudinally extended part 113, for fixing to a wall and for covering the power supply cable, which is adapted to support in a cantilever manner, as a first end 115 thereof, the supporting part 111,
such predominantly longitudinally extended part 113 having a passage space 117 for an electric power supply cable 118, the passage space 117 extending from the first end 115 to a region proximate to the second opposite end 116 of the predominantly longitudinally extended part 113.

In this second embodiment, the supporting part 111 and the predominantly longitudinally extended part 113 are monolithic.

In particular, the supporting part 111 and the predominantly longitudinally extended part 113 are formed by a single plate 140, which can be fixed to a wall 20 with screw anchors, appropriately spaced from the corner 28.

In a constructive variation of the second embodiment of the luminaire, designated by the numeral 210 in Figure 6, the supporting parts 211 and the predominantly longitudinally extended part 213 are two distinct pieces.

In particular, the supporting part 211 and the predominantly longitudinally extended part 213 are formed by two distinct plates 241 and 242, which can be fixed to the wall 20 by means of screw anchors, appropriately spaced from the corner 28, each of the plates 241 and 242 extending in different and converging directions.

By virtue of such a structure it is possible to arrange the electrically powered element supported by the luminaire 210 at a height from the ground that is different with respect to the height of the exit hole 34 of the electrical cable 18.

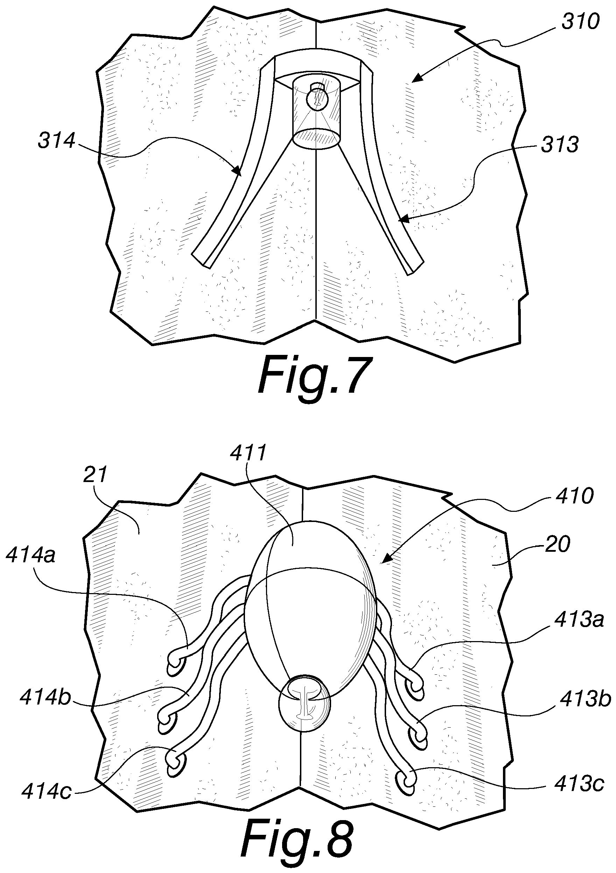

Figure 7 shows a first constructive variation of the first embodiment of the luminaire according to the invention, designated therein by the reference numeral 310.

Whereas in the first embodiment of the luminaire 10, of Figures 2 and 3, the predominantly longitudinally extended parts 13 and 14 are arranged on a same plane of arrangement which is perpendicular to both of the converging walls 20 and 21 and is substantially horizontal, in the first variation of Figure 7 the predominantly longitudinally extended parts 313 and 314 are each arranged on a plane that is inclined with respect to a horizontal reference plane.

With this luminaire 310 also it is possible to arrange the electrically powered element at a height from the ground that is different with respect to the height of the exit hole 34 of the electrical cable 18.

Figure 8 shows a second constructive variation of the first embodiment of the luminaire not according to the invention, designated therein by the numeral 410.

In this variation, the luminaire 410 comprises a supporting part 411 for an electrically powered element, and more than one predominantly longitudinally extended part, for example three, 413a, 413b, 413c, and 414a, 414b and 414c, for each one of the converging walls 20 and 21.

The luminaire 10, 110, 210, 310, 410, although described for outdoor applications, obviously is to be understood as applicable also at corners between internal walls.

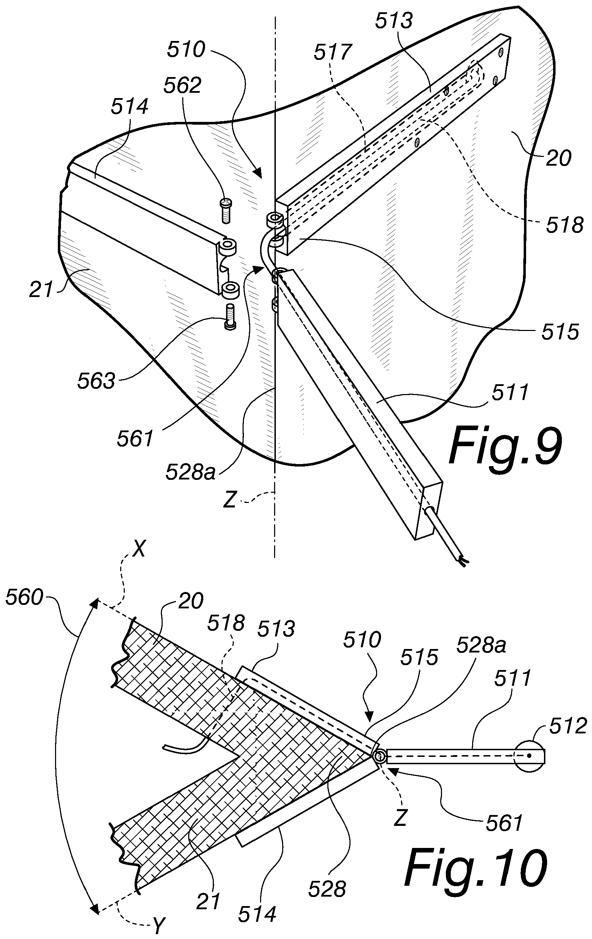

Figures 9 and 10 show another variation of the second embodiment of the luminaire, designated therein by the numeral 510.

The wall-mounted luminaire 510 comprises:
- a supporting part 511 for an electrically powered element, for example a lamp 512,
- at least one predominantly longitudinally extended part 513, and for example two predominantly longitudinally extended parts 513 and 514, for fixing to a wall and for covering the power supply cable, which is adapted to support in a cantilever manner, at a first end 515 thereof, the supporting part 511.

At least one predominantly longitudinally extended part, for example 513, has a passage space 517 for an electric power supply cable 518, as already described above for the second embodiment.

The luminaire 510 has the particularity of comprising two predominantly longitudinally extended parts 513 and 514 which are rotatably coupled to each other and to the supporting part 511, about an axis Z which is substantially parallel to the line 528a of the corner 528, so as to adapt the mutual angular arrangement to the actual angle 560 that is defined by the intersection of the planes of arrangement X and Y of two converging walls 20, 21 to which the luminaire 510 is fixed.

In the example described and shown in Figures 9 and 10, the actual angle 560 is less than 90°.

The rotatable coupling between the predominantly longitudinally extended parts 513 and 514 and the supporting part 511 is constituted for example by a coaxial bush hinge 561, with a pivot that can be formed by one or more locking screws 562 and 563.

In practice it has been found that the invention achieves the intended aim and objects.

In particular, the invention provides a luminaire capable of allowing better and greater lighting at a corner of a building, by virtue of the possibility to arrange a lamp at the very corner of a building, so as to light two converging sides of the building with a single luminaire.

Moreover, the invention provides a luminaire the electric power supply cables of which are better protected with respect to known solutions.

Furthermore, the invention provides a luminaire that can be installed without risks for the integrity of a corner of a building to which the luminaire is applied.

Moreover, the invention provides a luminaire that can be installed even in the presence of a vertical gutter pipe.

Furthermore, the invention provides a luminaire that can be installed easily at the corner of a building even in the presence of contiguous walls that are not perfectly perpendicular.

Furthermore, the invention provides a luminaire that has a better visual impact than supporting systems of the known type, by virtue of the broad possibility of aesthetic shapes that it is possible to give to its various parts.

The invention thus conceived is susceptible of numerous modifications and variations, all of which are within the scope of the appended claims; all the details may furthermore be replaced with other technically equivalent elements.

In practice, the components and materials used, so long as they are compatible with the specific use, as well as the contingent shapes and dimensions, may be any according to the requirements and the state of the art.

This application claims the priority of the disclosures in Italian Patent Application No. 102016000118867 (UA2016A008482).

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A wall-mounted luminaire (10), comprising
- a supporting part (11) for an electrically powered element, and
- at least one predominantly longitudinally extended part (13) for fixing to a wall and for covering the power supply cable, which is adapted to support in a cantilever manner, at a first end (15), said supporting part (11),
said at least one predominantly longitudinally extended part (13) being provided with a space (17) for the passage of an electric power supply cable (18), said passage space (17) extending from said first end (15) to a region proximate to the second opposite end (16) of said predominantly longitudinally extended part (13) wherein
the wall-mounted luminaire (10) is provided with two predominantly longitudinally extended parts (13, 14), which are arranged so that they both extend from the supporting part (11), so as to form between them an angle that corresponds to the angle (19) formed by the intersection of the planes of arrangement (X, Y) of two converging walls (20, 21) to which the luminaire (10) is fixed and **characterized in that** each predominantly longitudinally extended part (13, 14) is fixed to a wall by virtue of snap coupling means, comprising two contoured blocks (26, 27) to be fixed, mutually spaced, to a wall, and corresponding complementarily shaped coupling portions formed inside the predominantly longitudinally extended part (13, 14).

2. The luminaire according to claim 1, **characterized in that** it supports a cantilever lamp (12) in the angular sector formed by said angle (19), so that said lamp (12) can light both converging walls (20, 21), for an overall lighting angle of approximately 270°, if the converging walls (20, 21) are at 90° with respect to each other.

3. The luminaire according to one or more of the preceding claims, **characterized in that** said electrically powered element is a sign or a video camera or a sensor in general.

4. The luminaire according to claim 1, **characterized in that** the supporting part (11) is fixed to the predominantly longitudinally extended parts (13, 14) with snap coupling means (24, 25).

5. The luminaire according to one or more of the preceding claims, **characterized in that** said predominantly longitudinally extended part (13, 14) is provided with a flat portion (31, 32).

6. The luminaire according to claim 1, **characterized in that** said predominantly longitudinally extended parts (13, 14) are constituted by shells made of plastic material which are open on a first side that is designed to face the wall (20, 21) and, on a second side which is perpendicular to the first side, designed to face and be coupled to the supporting part (11).

7. The luminaire according to claim 1, **characterized in that** said supporting part (111) and the predominantly longitudinally extended part (113) are monolithic.

## Patentansprüche

1. Eine Wandleuchte (10), die Folgendes umfasst:
- ein tragendes Teil (11) für ein elektrisch betriebenes Element, und
- mindestens ein sich hauptsächlich in Längsrichtung erstreckendes Teil (13) zur Befestigung an einer Wand und zur Abdeckung des Stromversorgungskabels, das ausgebildet ist, um an einem ersten Ende (15) freitragend das tragende Teil (11) zu tragen,
wobei das mindestens eine sich hauptsächlich in Längsrichtung erstreckende Teil (13) mit einem Raum (17) für das Hindurchführen eines Stromversorgungskabels (18) ausgestattet ist, wobei der Durchführungsraum (17) sich von dem ersten Ende (15) zu einem Bereich in der Nähe des zweiten gegenüberliegenden Endes (16) des sich hauptsächlich in Längsrichtung erstreckenden Teils (13) erstreckt, wobei die Wandleuchte (10) mit zwei sich hauptsächlich in Längsrichtung erstreckenden Teilen (13, 14) ausgestattet ist, die so angeordnet sind, dass sie sich beide von dem tragenden Teil (11) so erstrecken, dass sie zwischen sich einen Winkel bilden, der dem Winkel (19) entspricht, der durch die Kreuzungsstelle der Anordnungsebenen (X, Y) zweier zusammenlaufender Wände (20, 21) gebildet wird an denen die Leuchte (10) befestigt ist und
**dadurch gekennzeichnet, dass** jedes sich hauptsächlich in Längsrichtung erstreckende Teil (13, 14) durch Schnappverbindungsmittel an einer Wand befestigt ist, die zwei konturierte Blöcke (26, 27) umfassen, welche voneinander beabstandet an einer Wand befestigt werden sollen und entsprechende komplementär geformte Kopplungsabschnitte, die innerhalb des sich hauptsächlich in Längsrichtung ersteckenden Teils (13, 14) geformt sind.

2. Die Leuchte gemäß Anspruch 1, **dadurch gekennzeichnet, dass** sie eine Auslegerlampe (12) in dem Winkelsektor umfasst, der durch den Winkel (19) gebildet wird, so dass die Lampe (12) beide zusammenlaufende Wände (20, 21) beleuchten kann zum Zwecke eines Gesamtbeleuchtungswinkels von ungefähr 270°, wenn die zusammenlaufenden Wände (20, 21) sich in einem Winkel von 90° zueinander befinden.

3. Die Leuchte gemäß einem oder mehreren der obigen Ansprüche, **dadurch gekennzeichnet, dass** das elektrisch betriebene Element ein Zeichen oder eine Videokamera oder ein Sensor im Allgemeinen ist.

4. Die Leuchte gemäß Anspruch 1, **dadurch gekennzeichnet, dass** der tragende Teil (11) durch Schnappverbindungsmittel (24, 25) an den sich hauptsächlich in Längsrichtung erstreckenden Teilen (13, 14) befestigt ist.

5. Die Leuchte gemäß einem oder mehreren der obigen Ansprüche, **dadurch gekennzeichnet, dass** das sich hauptsächlich in Längsrichtung erstreckende Teil (13, 14) mit einem flachen Abschnitt (31, 32) ausgestattet ist.

6. Die Leuchte gemäß Anspruch 1, **dadurch gekennzeichnet, dass** die sich hauptsächlich in Längsrichtung erstreckenden Teile (13, 14) aus Schalen aus Kunststoffmaterial bestehen, die an einer ersten Seite offen sind, welche dazu bestimmt ist, der Wand (20, 21) zugewandt zu sein und auf einer zweiten Seite, die senkrecht zur ersten Seite ist, dazu bestimmt sind, den tragenden Teil (11) zugewandt und mit ihm gekoppelt zu sein.

7. Die Leuchte gemäß Anspruch 1, **dadurch gekennzeichnet, dass** der tragende Teil (111) und der sich hauptsächlich in Längsrichtung erstreckende Teil (113) monolithisch sind.

## Revendications

1. Applique murale (10) comprenant :
- une pièce de support (11) pour un élément électrique, et
- au moins une pièce s'étendant de façon principalement longitudinale (13) destinée à être fixée sur un mur et à couvrir le câble d'alimentation électrique, qui est adaptée pour supporter en porte-à-faux, à une première extrémité (15), ladite pièce de support (11),
ladite au moins une pièce s'étendant de façon principalement longitudinale (13) étant pourvue d'un espace (17) pour le passage d'un câble d'alimentation électrique (18), ledit espace de passage (17) s'étendant de ladite première extrémité (15) à une région proche de la deuxième extrémité, opposée, (16) de ladite pièce s'étendant de façon principalement longitudinale (13), dans laquelle
l'applique murale (10) est pourvue de deux pièces s'étendant de façon principalement longitudinale (13, 14), qui sont disposées de telle manière qu'elles s'étendent toutes les deux depuis la pièce de support (11), afin de former entre elles un angle qui correspond à l'angle (19) formé par l'intersection des plans d'installation (X, Y) de deux murs convergents (20, 21) sur lesquels est fixée l'applique (10),
et **caractérisée en ce que** chaque pièce s'étendant de façon principalement longitudinale (13, 14) est fixée à un mur grâce à un moyen d'accouplement par emboîtement, comprenant deux blocs profilés (26, 27) destinés à être fixés, mutuellement espacés, sur un mur, et des parties d'accouplement correspondantes, de forme complémentaire, formées à l'intérieur de la pièce s'étendant de façon principalement longitudinale (13, 14).

2. Applique selon la revendication 1, **caractérisée en ce qu'**elle supporte une lampe en porte-à-faux (12) dans le secteur angulaire formé par ledit angle (19), de sorte que ladite lampe (12) peut éclairer les deux murs convergents (20, 21), sur un angle d'éclairage global d'environ 270°, si les murs convergents (20, 21) forment un angle de 90° l'un par rapport à l'autre.

3. Applique selon l'une ou plusieurs des revendications précédentes, **caractérisée en ce que** ledit élément électrique est une enseigne ou une caméra vidéo ou un capteur en général.

4. Applique selon la revendication 1, **caractérisée en ce que** la pièce de support (11) est fixée aux pièces s'étendant de façon principalement longitudinale (13, 14) à l'aide de moyens d'accouplement par emboîtement (24, 25).

5. Applique selon l'une ou plusieurs des revendications précédentes, **caractérisée en ce que** ladite pièce s'étendant de façon principalement longitudinale (13, 14) est pourvue d'une partie plate (31, 32).

6. Applique selon la revendication 1, **caractérisée en ce que** lesdites pièces s'étendant de façon principalement longitudinale (13, 14) sont constituées de coques en matière plastique qui sont ouvertes sur un premier côté qui est conçu pour être face au mur (20, 21) et, sur un deuxième côté qui est perpendiculaire au premier côté, conçu pour être face à la pièce de support (11) et pour être accouplé à celle-ci.

7. Applique selon la revendication 1, **caractérisée en ce que** ladite pièce de support (111) et la pièce s'étendant de façon principalement longitudinale (113) sont monolithiques.
